# EUROPEAN PATENT SPECIFICATION

(11) **EP 1 579 979 B1**
(45) Date of publication and mention of the grant of the patent: **01.04.2009**
(21) Application number: 03809851.3
(22) Date of filing: 23.10.2003
(51) Int. Cl.: B29C 49/02, B29B 11/12, B29C 49/22, B29C 49/08, B29C 43/08, B29C 43/42

(54) **PREFORM AND BIAXIALLY STRETCHED CONTAINER OBTAINED FROM THE PREFORM**
VORFORMLING UND AUS DEM VORFORMLING ERHALTENER BIAXIAL GESTRECKTER BEHÄLTER
PARAISON ET RÉCIPIENT OBTENU PAR ÉTIREMENT BIAXIAL DE LA PARAISON

(30) Priority: 30.10.2002 JP 2002315160
(43) Date of publication of application: 28.09.2005
(60) Divisional application: 08169920.9
(73) Proprietor: Toyo Seikan Kaisha, Ltd., Tokyo 100-0011 (JP)
(72) Inventor: KIKUCHI, Atsushi, Toyo Seikan Group Corp. R & D, Yokohama-shi, Kanagawa 240-0062 (JP); KOMATSU, Ikuo, Toyo Seikan Group Corporate R & D, Yokohama-shi, Kanagawa 240-0062 (JP)
(74) Representative: W.P. Thompson & Co.
(86) International application number: PCT/JP2003/013549
(87) International publication number: WO 2004/039559

(56) References cited:
- EP-A1- 1 193 054
- WO-A-96/30191
- JP-A- 10 337 769
- JP-A- 2000 025 729
- JP-A- 2000 025 729
- JP-A- 2000 062 008
- JP-A- 2002 248 675
- JP-A- 2002 292 723
- JP-A- 2003 136 583
- US-A- 6 060 140
- US-A1- 2002 088 767

## Description

### (Technical Field)

The present invention relates to a single-layer or multi-layer preform having a polyester layer, to a method of producing the preform and to a container obtained by biaxially draw-blow-forming the preform. More specifically, the invention relates to a preform suppressing the thermal decomposition of the polyester resin and drastically decreasing the residual acetaldehyde, and to a biaxially drawn container obtained by biaxially draw blow-forming the preform and having excellent mechanical strength and flavor-retaining property.

### (Background Art)

Draw blow-formed plastic containers and, particularly, biaxially drawn polyester containers have nowadays been generally used for such applications as containing liquids like liquid detergent, shampoo, cosmetics, soy source, source, etc. as well as for containing carbonated beverages like beer, coke, cider, fruit juice, mineral water, etc. owing to their excellent transparency and a suitable degree of gas barrier property.

A biaxially drawn polyester container is formed by a method of forming, in advance, a preform of an amorphous polyester with a bottom having a size considerably smaller than the size of the finally obtained container by injection-molding a polyester resin, pre-heating the preform at a drawing temperature, tension-drawing the preform in the axial direction in a blowing metal mold, and blow-drawing the preform in the circumferential direction (see, for example, JP-A-4-154535).

The preform with the bottom has a shape that includes a mouth-and-neck portion that corresponds to the mouth-and-neck portion of the container and the cylindrical portion with a bottom that is to be draw blow-formed, the shape being, usually, like that of a test tube as a whole. The mouth-and-neck portion forms engaging means to engage with an open end for sealing or with a closure. From the necessity of injection-molding, further, a gate portion is necessarily formed to protrude outward from the center of the bottom portion. It has been known already to produce the preform with the bottom by compression-forming a resin. That is, there has been proposed a method of producing a preform by cutting and holding a molten resin mass extruded from the extruder, feeding it into a female mold, and compression-forming the preform in the female mold by press-inserting a male mold into the female mold (JP-A-2000-280248).

In producing the preform by the injection molding, however, the melt-plasticized resin is injected into a cavity through a nozzle, a sprue, a runner and a gate. That is, the resin resides in the injection-molding machine for extended periods of time accounting for a cause of deterioration of the resin. In particular, the inherent viscosity and the molecular weight of the polyester resin decrease due to the thermal decomposition making it difficult to obtain a satisfactory mechanical strength.

Further, acetaldehyde generates during the thermal decomposition of the polyester resin. The acetaldehyde that remains in the polyester becomes a cause of deteriorating the flavor-retaining property of the bottle.

Reference is also made to JP2002-248675 which discloses a multilayer preform for molding a bottle which is resistant to interlayer release and has good impact resistance without causing blushing due to crystallization, even when using a PCR resin and without a gate or gate mark in the base. The multilayer preform comprises an outer layer of a weight ratio (Y) represented by formula Y=[(W-X)/W]x[To/(To+Ti)]x 100(%), wherein W is a weight of the entirety of the preform, X is a weight of a neck part including a neck ring, To is a thickness of the outer layer of the preform and Ti is a thickness of an inner layer.

Reference is also made to EP 1 193 054 A1 which discloses a multilayer preform for molding a bottle according to the preamble of claim 1.

### (Disclosure of the Invention)

It is, therefore, an object of the present invention to provide a preform that suppresses the thermal decomposition of the resin at the time of forming the preform and effectively suppresses the drop of the inherent viscosity and the formation of the acetaldehyde.

Another object of the present invention is to provide a biaxially drawn container having excellent mechanical strength and flavor-retaining property by biaxially draw blow-forming the preform.

According to the present invention, there is provided a preform formed by compression-forming and having a layer of a gas-barrier resin or a recycled polyester resin as an intermediate layer and having inner and outer layers of a polyester resin, wherein the time is from 300 seconds to 700 seconds before a calorific value of isothermal crystallization of said polyester resin at 210°C reaches a maximum value.

In the preform of the present invention, it is desired that:
1. The polyester resin is the one that contains an ethylene terephthalate unit at a ratio of not smaller than 95 mol%; and
2. The polyester resin contains recycled polyester resins.

Also disclosed, but not forming part of the present invention, is a method of producing a preform having at least a layer of a polyester by the compression-forming, wherein the molten polyester resin having an inherent viscosity at the time of melt-extrusion of not smaller than 0.72 dL/g is fed to a compression-forming machine and is compression formed.

The inherent viscosity at the time of melt-extrusion does not substantially vary even in the preform obtained by the compression-forming or in the biaxially drawn container that will be described later.

In the above method of producing the preform, it is desired that:
4. The temperature of melt-extruding the molten polyester resin is in a range of Tm + 5°C to Tm + 40°C with the melting point (Tm) of the polyester resin as a reference; and
5. A drop of the inherent viscosity at the time of melt-extrusion from the inherent viscosity of when the polyester resin is thrown into the extruder is not larger than 10%.

According to the present invention, further, there is provided a biaxially drawn container obtained by biaxially draw blow-forming the preform of the present invention, wherein the time is from 300 seconds to 700 seconds before a calorific value of isothermal crystallization of the polyester layer at 210°C reaches a maximum value.

The preform of the invention is the one having at least a polyester layer and is formed by the compression-forming, wherein an important feature resides in that the time is not shorter than 300 seconds before a calorific value of isothermal crystallization of the polyester layer at 210°C reaches a maximum value. As described above, the mechanical strength of the draw blow-formed container decreases due to a drop in the inherent viscosity caused by the thermal decomposition of the polyester resin at the time of forming the preform.

Namely, the present invention is based on a discovery that a preform having a favorable crystallization time effectively suppresses the thermal deterioration of the resin.

Further, the preform of the present invention is produced suppressing the thermally decomposition accounting for a very decreased amount of acetaldehyde that remains in the preform. Therefore, the draw blow-formed container obtained by biaxially draw blow-forming the preform features excellent draw blow-formability and flavor-retaining property.

In the draw blow-formed container obtained by biaxially draw blow-forming the preform having the above crystallization time, too, the time is not shorter than 300 seconds before a calorific value of isothermal crystallization of the polyester layer at 210°C reaches a maximum value like that of the preform, exhibiting excellent mechanical strength and flavor-retaining property.

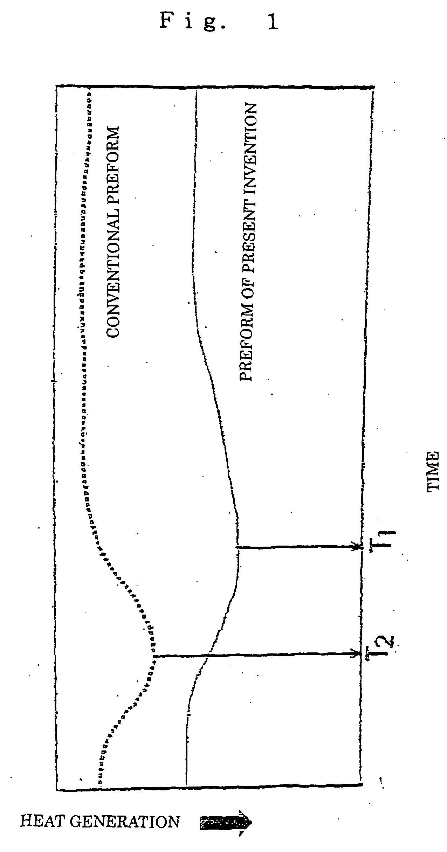

Fig. 1 illustrates the measurement of times before peaks of heat generation occur accompanying the crystallization when samples cut out from the container bodies are heated and melted at 290°C for 3 minutes and are held at 210°C by using a differential scanning calorimeter (DSC) when there are used a preform of the invention and a conventional preform obtained by the injection-informing.

The preform of the invention exhibits a peak of heat generation due to the crystallization which is broader than a peak of heat generation due to the crystallization of the preform obtained by the injection-forming. Further, the time T₁ before the calorific value of the preform of the invention reaches a maximum value is considerably longer than the time T₂ before the caloric value of the preform obtained by the injection-forming reaches a maximum value, from which it will be comprehended that the crystallization time is considerably longer than that of the preform obtained by the injection-forming.

Namely, in the present invention, it is important that the time is not shorter than 300 seconds and, particularly, is in a range of 400 to 700 seconds before the calorific value of isothermal crystallization of the surface of the bottle body at 210°C reaches a maximum value. This will become obvious from the results of Examples appearing later.

In, for example, a preform having the time of not longer than 300 seconds before a calorific value of isothermal crystallization of the polyester layer at 210°C reaches a maximum value as demonstrated in Comparative Example 1, the amount of the acetaldehyde is 2.9 µg/L. When this preform is biaxially draw blow-formed into a bottle, the time is 250 seconds before the calorific value of isothermal crystallization of the polyester layer at 210°C reaches a maximum value, and the container body exhibits a low buckling strength, a poor mechanical strength and inferior flavor-retaining property.

In a preform having the time of not shorter than 300 seconds before a calorific value of isothermal crystallization of the polyester layer at 210°C reaches a maximum value as demonstrated in Example 1, on the other hand, the amount of the acetaldehyde is 1.9 µg/L which is a conspicuous decrease in the amount of the acetaldehyde as compared to that of Comparative Example 1. Besides, when this preform is biaxially draw blow-formed into a bottle, the time is 600 seconds before the calorific value of isothermal crystallization of the polyester layer at 210°C reaches a maximum value, and the container body exhibits a high buckling strength and excellent flavor-retaining property.

As described above, it is desired that the preform of the present invention is compression-formed by feeding a molten polyester resin having an inherent viscosity of not smaller than 0.72 dL/g to the compression-forming machine.

In compression-forming the preform, a molten resin mass (drop) must be conveyed to the position of compression-forming. However, a crystalline resin that can be drawn and oriented, such as a polyester resin, usually, has a large draw-down tendency. When plasticized, i.e., when an inherent viscosity (IV) greatly drops down during the melt-kneading, therefore, the resin exhibits decreased mechanical strength and decreased flavor retentivity due to the thermal deterioration and, besides, undergoes the draw-down when a drop is formed arousing problems of spinning at the time of obtaining a molten resin mass (drop) by cutting the molten resin, a decrease in the stability of conveyance up to the step of compression molding and a decrease in the upright attitude in the compression metal mold. The present invention suppresses a drop in the inherent viscosity (IV) caused by the thermal decomposition of the resin when it is being plasticized and maintains the inherent viscosity to be not lower than 0.72 dL/g when the resin is being melt-extruded making it possible to improve the problems of spinning in obtaining the drop, stability in the conveyance up to the step of compression-forming and stability in the upright attitude in the compression metal mold.

### (Brief Description of the Drawings)

Fig. 1 is a diagram illustrating the results of measuring the times before there occur peaks of heat generation accompanying the crystallization when samples cut out from the container bodies are heated and melted at 290°C for 3 minutes and are held at 210°C by using a differential scanning calorimeter (DSC) when there are used a preform of the invention and a conventional preform obtained by the injection-forming; Fig. 2 is a view illustrating a compression-forming apparatus used for forming a preform of the present invention;
Fig. 3 is a sectional view illustrating a preform according to the present invention; and
Fig. 4 is a view illustrating a biaxially drawn polyester container of the present invention.

### (Best Mode for Carrying Out the Invention)

### (Polyester Resin)

As the polyester resin that can be used for the present invention, there can be used thermoplastic polyester resins in general that have heretofore been used for the packaging containers such as blow-formed containers. In particular, there can be advantageously used an ethylene terephthalate type thermoplastic polyester. It is, however, also allowable to use any other polyesters such as a polybutylene terephthalate and a polyethylene naphthalate, as well as a blend thereof with a polycarbonate or a polyarylate, as a matter of course.

In the ethylene terephthalate type thermoplastic polyester which is a polyester resin that can be favorably used for the present invention, most of and, particularly, not less than 95 mol% of the ester recurring unit is occupied by the ethylene terephthalate unit. It is therefore desired to use a thermoplastic polyester having a glass transition point (Tg) of 50 to 90°C and, particularly, 55 to 80°C and a melting point (Tm) of 200 to 275°C and, particularly, 220 to 270°C.

Though a homopolyethylene terephthalate is preferred from the standpoint of heat resistance and pressure resistance, it is allowable to use a copolymerized polyester containing small amounts of ester units other than the ethylene terephthalate units.

As the dibasic acid other than the terephthalic acid, there can be used aromatic dicarboxylic acids such as isophthalic acid, phthalic acid and naphthalenedicarboxylic acid; alicyclic dicarboxylic acids such as cyclohexanedicarboxylic acid; and aliphatic dicarboxylic acids such as succinic acid, adipic acid, sebacic acid and dodecanedioic acid in one kind or in a combination of two or more kinds. From the standpoint of improving the heat resistance, in particular, it is desired to use the isophthalic acid in combination.

As the diol component other than the ethylene glycol, there can be exemplified propylene glycol, 1,4-butanediol, diethylene glycol, 1,6-hexylene glycol, cyclohexanedimethanol, and ethylene oxide adduct of bisphenol A, which may be used in one kind or in two or more kinds.

Further, the ethylene terephthalate thermoplastic polyester may be used being blended with, for example, a polyethylene naphthalate, a polycarbonate or a polyarylate having a relatively high glass transition point in an amount of about 5 to about 25%. Further, there may be formed a double layer of the polyethylene terephthalate and the above material having a relatively high glass transition point.

The polyester resin that is used should at least have a molecular weight large enough for forming a film, and is of the injection grade or the extrusion grade depending upon the use. Its inherent viscosity (IV) is, usually, desired to lie in a range of 0.72 to 0.90 dL/g and, particularly, 0.73 to 0.88 dL/g as measured in a mixed solvent of phenol and tetrachloroethane at a weight ratio of 60:40 at a temperature of 30°C.

### (Other Resins)

The preform of the present invention may be a single-layer preform of the polyester resin only or a multi-layer preform having layers of thermoplastic resins other than the above polyester resin.

As the thermoplastic resin other than the polyester resin, there can be used any resin provided it can be draw blow-formed and heat-crystallized. Though not necessarily limited thereto only, examples thereof may include olefin-type resins such as polyethylene, polypropylene, ethylene/propylene copolymer, ethylene/vinyl alcohol copolymer and cyclic olefin polymer, and polyamide resins such as xylylene group-containing polyamide. There can be further used an oxygen-absorbing gas-barrier resin composition obtained by blending a xylylene group-containing polyamide with a diene compound and a transition metal catalyst, or a recycled polyester (PCR (resin regenerated from the used bottles), SCR (resin by-produced in the production plant) or a mixture thereof). It is desired that the recycled polyester resins have intrinsic viscosities (IVs) in a range of 0.65 to 0.75 dL/g as measured by the above-mentioned method.

The recycled polyester may be used alone or as a blend with a virgin polyester. When the recycled polyester has a decreased inherent viscosity, it is desired to use it as a blend with the virgin polyester. In this case, the blending ratio of the recycled polyester to the virgin polyester is desirably from 1:5 to 5:1 by weight.

Further, the inner layer or the outer layer may be adhered to the intermediate layer via an adhesive resin. As the adhesive resin, there can be used an acid-modified olefin resin which is graft-polymerized with maleic acid, an amorphous polyester resin, or a polyamide resin.

Further, the above polyester resins or the thermoplastic resins other than the above polyester resin may be blended with various additives for resins, such as a coloring agent, an ultraviolet ray absorber, a parting agent, a lubricant and a nucleating agent in a range in which they do not impair the quality of the biaxially drawn container which is the finally formed article.

### (Layer Constitution)

Though not limited thereto only, the layer constitutions of the multi-layer preforms of the present invention are as described below. Abbreviations in the following multi-layer structures are PET: virgin polyester resin, GBR: gas-barrier resin, PCR: recycled polyester resin, ADR: adhesive resin, OAR: oxygen-absorbing resin composition, and COC: cyclic olefin copolymer.

| | |
|---|---|
| Three-layer structure: | PET/GBR/PET, PET/PCR/PET |
| | PET/(PET + PCR)/PET |
| Four-layer structure: | PET/GBR/PCR/PET |
| | PET/GBR/OAR/PET |
| | PET/GBR/COC/PET |
| Five-layer structure: | PET/ADR/GBR/ADR/PET |
| | PET/ADR/OAR/ADR/PET |
| | PET/GBR/PCR/GBR/PET |
| | PET/ADR/(GBR + OAR)/ADR/PET |
| Six-layer structure: | PET/ADR/GBR/ADR/PCR/PET |
| | PET/ADR/OAR/ADR/PCR/PET |
| Seven-layer structure: | PET/PCR/ADR/GBR/ADR/PCR/PET |
| | PET/ADR/GBR/ADR/OAR/ADR/PET |

### (Forming the Preform)

According to the present invention, as described earlier, the preform has a layer of a polyester resin and is formed by the compression-forming, wherein the time is not shorter than 300 seconds before a calorific value of isothermal crystallization of the layer of the polyester resin at 210°C reaches a maximum value.

In an ordinary injection-forming machine, the cavity is filled with the resin running through a hot runner and a gate. When the injection-forming machine has the hot runner, however, the residence time of the molten resin increases and the resin tends to be thermally decomposed making it difficult to form the preform having the layer of the polyester resin, wherein the time is not shorter than 300 seconds before a calorific value of isothermal crystallization of the layer of the polyester resin at 210°C reaches a maximum value.

In the compression-forming, on the other hand, the residence time of the resin is short, and the resin is not thermally deteriorated unlike that of the case of the injection forming making it possible to use a general-purpose resin. Besides, there are obtained such advantages that there is formed no gate portion that causes whitening in the bottom portion that takes place in the injection forming, fluidization of the resin is not oriented in the bottom portion of the preform, and that no residual distortion takes place in the bottom portion due to the orientation of the fluidity affecting little the properties of the formed article.

According to the present invention, therefore, it is important that the preform is compression-formed and, particularly, the molten polyester resin having an inherent viscosity of not smaller than 0.72 dL/g is fed to the compression-forming machine at the time of melt extrusion preventing the thermal deterioration of the resin, improving the spinning at the time of obtaining a drop by cutting the molten polyester resin, improving the stability in the conveyance up to the step of compression-forming and in the upright attitude in the compression metal mold.

In producing the preform of the present invention, it is desired that the temperature of melt-extruding the molten polyester resin is in a range of Tm + 5°C to Tm + 40°C and, particularly, in a range of Tm + 10°C to Tm + 30°C with the melting point (Tm) of the polyester resin as a reference. When the temperature is lower than the above temperature range, the shearing rate becomes so great that it often becomes difficult to form a uniformly melt-extruded article. When the temperature exceeds the above range, on the other hand, the resin is thermally deteriorated to a large degree or undergoes the draw-down to a large extent making it difficult to form the preform having the above-mentioned properties.

It is further desired that a drop in the inherent viscosity at the time of melt extrusion is not larger than 10% on the basis of the inherent viscosity at the time when the polyester resin is thrown into the extruder.

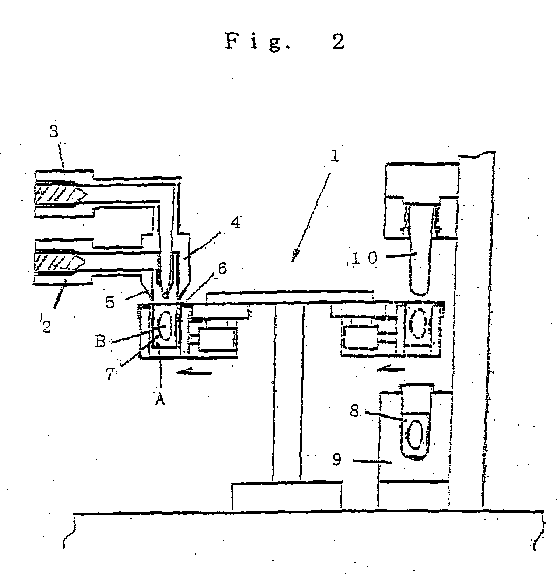

Fig. 2 is a view illustrating a compression-forming apparatus used for forming the multi-layer preform of the present invention. In the compression-forming apparatus which as a whole is designated at 1, a resin A for forming the inner and outer layers is continuously fed from a main extruder 2, and a resin B for forming the intermediate layer is intermittently fed from a sub-extruder 3. The two resins meet together in a multi-layer die 4 and are melt-extruded from a nozzle 5 provided under the multi-layer die 4 in a manner that the resin B is sealed in the resin A. A resulting composite molten resin 7 that is extruded is cut into a predetermined size at a portion where there is no intermediate layer by cutting means 6 that moves in a horizontal direction. Immediately after having been cut, a mass 8 of the composite molten resin that is cut is held by a jig and is conveyed into a female mold 9 of the compression-forming apparatus constituted by the female mold 9 and a male mold 10. The mass 8 of the composite molten resin in the female mold 9 is compression-formed by the male mold 10 to form a multi-layer preform having the intermediate layer sealed by the inner layer and the outer layer.

It is desired that the preform of the invention is formed by using a multi-axis extruder that extrudes the molten resin in carrying out the compression-forming. This makes it possible to plasticize the resin at a lower temperature, under a lower pressure and at a lower rate than those of when a monoaxial extruder is used, as well as to relatively narrow the distribution of residence times in the extruder and, hence, to suppress the thermal degradation of the resin at the time of plasticizing, and to suppress a drop in the inherent viscosity and the formation of the acetaldehyde caused by the hydrolysis. It is further desired that the extruder is equipped with a vent to forcibly drain the water contained in the molten resin and the aldehyde formed by the thermal decomposition through a vent hole on the extruder side, making it possible to suppress the hydrolysis of the polyester caused by water and to improve the flavor-retaining property of the bottle.

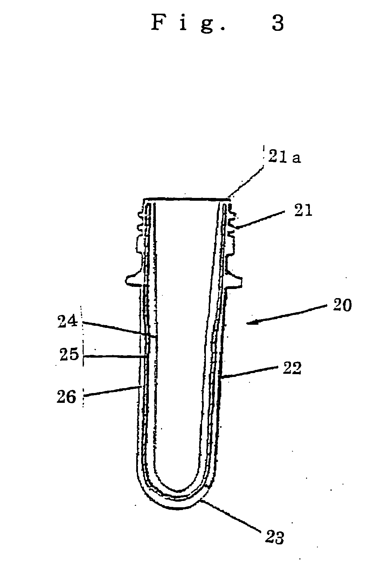

Fig. 3 is a sectional view illustrating a multi-layer preform among the preforms of the present invention. The multi-layer preform generally designated at 20 includes a mouth-and-neck portion 21, a container body 22 and a bottom portion 23. The drawing concretely illustrates the preform obtained by the compression-forming without gate in the bottom portion. Besides, the mouth-and-neck portion 21 except an end portion 21a has the same three-layer structure including an inner layer 24, an intermediate layer 25 and an outer layer 26.

### (Biaxially Drawn Container)

The biaxially drawn container of the invention is such that the time is not shorter than 300 seconds before a calorific value of isothermal crystallization of the layer of the polyester resin at 210°C reaches a maximum value, and is obtained by subjecting the preform of the invention to the biaxial draw blow-forming.

In the biaxial draw blow-forming, the preform of the present invention is heated at a drawing temperature, drawn in the axial direction and is blow-formed in the circumferential direction to produce the biaxially drawn container.

The forming of preform and the draw blow forming can be applied not only to the cold parison system but also to the hot parison system which effects the draw blow forming without completely cooling the preform. Prior to the draw blow, the preform, as required, is pre-heated to a temperature suited for the drawing by such means as the hot air, infrared-ray heater or r-f induction heating. In the case of the polyester, the temperature range is 85 to 120°C and, particularly, 95 to 110°C.

The preform is fed into the known draw blow-forming apparatus, is set in a metal mold, is tension-drawn in the axial direction by pushing a drawing rod, and is draw-formed in the circumferential direction by blowing the fluid. Generally, it is desired that the metal mold temperature is in a range of room temperature to 190°C. When the thermal fixing is to be effected by the one-molding method as will be described later, it is desired that the metal mold temperature is set to be 120 to 180°C.

The drawing ratio in the final biaxially drawn container is desirably 1.5 to 25 times in terms of an area ratio and, particularly, 1.2 to 6 times in terms of a drawing ratio in the axial direction and 1.2 to 4.5 times in terms of a drawing ratio in the circumferential direction.

The biaxially drawn container of the present invention can be thermally fixed by known means. The thermal fixing can be conducted by a one-molding method in a blow-forming metal mold or by a two-molding method in a metal mold for thermal fixing separate from the blow-forming metal mold. The temperature for the thermal fixing is in a range of, suitably, 120 to 180°C.

As another draw blow-forming method, there may be employed, as disclosed in Japanese Patent No. 2917851 assigned to the present applicant, a two-step blow-forming method in which the preform is formed into a primary blow-formed body of a size larger than that of the finally formed article by using a primary blow metal mold, and the primary blow-formed article is heat-shrunk and is draw blow-formed by using a secondary blow metal mold to obtain the finally formed article.

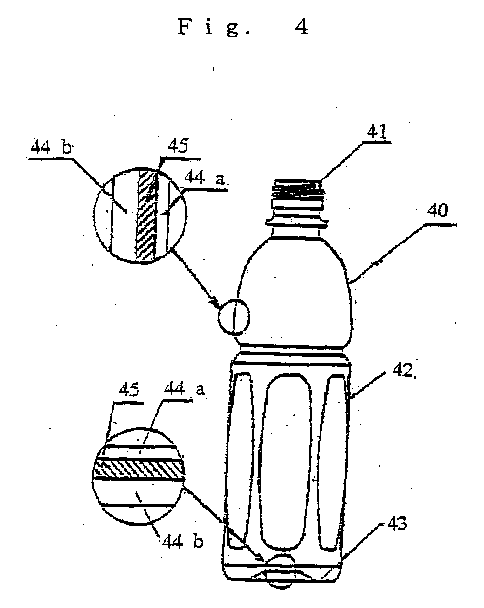

Fig. 4 illustrates a multi-layer structure among the biaxially drawn containers of the invention. In Fig. 4, the biaxially drawn container generally designated at 40 has the shape of a bottle including a mouth portion 41, a container body 42 and a bottom portion 43, the container body 42 and the bottom portion 43 being formed by an inner layer 44a, an outer layer 44b and an intermediate layer 45 sealed therebetween. The mouth portion 41 is formed by the inner layer and the outer layer only like that of the above-mentioned multi-layer preform.

### (EXAMPLES)

### [DSC Measurement]

The samples (10 mg) cut out from the preforms and from the bottle bodies were measured by using a differential scanning calorimeter (DSC 7 manufactured by Perkin Elmer Co.).

The sample temperature was scanned in order of:
1. Elevated from room temperature up to 290°C at a rate of 300°C /min.;
2. Held at 290°C for three minutes to melt;
3. Quickly cooling down to 210°C at a rate of 300°C /min.; and
4. Held at 210°C so as to be isothermally crystallized;
and the time was measured in 4. above until a calorific value of crystallization reaches a maximum value.

When the sample to be measured was a blend or multi-layers of the virgin polyethylene terephthalate resin and the recycled polyester resin, the time was measured until a maximum peak value of crystallization of the virgin polyethylene terephthalate resin was reached since the virgin polyethylene terephthalate resin undergoes the crystallization at a slow rate.

### [Measurement of IV(inherent viscosity)]

In the case of the single layers, small pieces cut out from the pellets of before being formed and cut out from the single-layer bottle bodies were used as samples.

In the case of the multi-layers, small pieces cut out from the mixtures of PET and PCR at layer-constituting ratios at the time of forming and cut out from the multi-layer bottle bodies were used as samples. The solvent was a mixture of phenol/tetrachloroethane = 5/5 (wt), and the inherent viscosities were measured at 30°C.

As for the measurement of IVs (inherent viscosities), the inherent viscosity at the time of melt extrusion was not substantially different from that of the preform obtained by compression-forming or from the biaxially drawn container. Therefore, small pieces cut out from the bottle bodies were used as samples.

### [Measurement of Longitudinal Compression Strength]

A maximum load of the load cell was measured when an empty bottle was compressed at a rate of 50 mm/min.

### [Measurement of the Amount of the Acetaldehyde]

A bottle was purged with nitrogen, sealed, preserved at 22°C for one day, and the concentration of the acetaldehyde in the bottle was found by the gas chromatographic analysis.

### [Example 1]

A polyethylene terephthalate resin (5015W manufactured by Shinkogosen Co., containing 98.0 mol% of ethylene terephthalate units, melting point of 244°C, inherent viscosity of 0.83) was fed into the hopper of an extruder, extruded under the conditions of a temperature of 270°C at the die portion, resin pressure of 70 kgf/cm² and an inherent viscosity of the molten polyester resin at the time of melt extrusion of 0.78 dL/g, and was cut into a molten resin mass.

The molten resin mass was set into a compression metal mold maintained at 20°C and was compression-formed under a condition of the mold-tightening pressure of 100 kgf/cm² to form a single-layer preform.

The obtained preform was heated at a drawing temperature of 110°C and was biaxially draw blow-formed in a metal mold maintained at 25°C to obtain a bottle having a weight of 25 g and a volume of 530 ml.

The preform that was formed was measured for its DSC, and the bottle was measured for its DSC, compression strength, tensile strength and the amount of the aldehyde.

### [Example 2]

A preform and a bottle were formed in the same manner as in Example 1 but extruding, as the polyester resin, a polyethylene terephthalate resin (J125T manufactured by Mitsui Kagaku Co., containing 100 mol% of ethylene terephthalate units, melting point of 254°C, inherent viscosity of 0.75 dL/g) under such a condition that the inherent viscosity of the molten polyester resin at the time of melt extrusion was 0.72 dL/g, setting the temperature of the metal mold in the biaxial draw blow-forming to be 150°C and effecting the thermal fixing in the metal mold, and were evaluated in the same manner as in Example 1.

### [Example 3]

A polyethylene terephthalate resin (5015W manufactured by Shinkogosen Co., containing 98.0 mol% of ethylene terephthalate units, melting point of 244°C, inherent viscosity of 0.83) was fed into an extruder for forming inner and outer layers, and a recycled polyester resin (flakes manufactured by Yono PET Bottle Recycle Co.) was fed into a biaxial extruder with a vent for forming an intermediate layer. The resins were co-extruded in a manner that the recycled polyester resin was sealed with the polyethylene terephthalate resin under the conditions of a temperature of 270°C at the die head, resin pressure of 70 kgf/cm² and an inherent viscosity of the molten polyester resin at the time of melt extrusion of 0.74 dL/g, and were cut into a molten resin mass.

The molten resin mass was set into a compression metal mold maintained at 20°C and was multi-layer compression-formed under a condition of the mold-tightening pressure of 100 kgf/cm² to form a two-kind-three-layer preform having the intermediate layer of the recycled polyester resin.

The obtained preform was heated at a drawing temperature of 110°C and was biaxially draw blow-formed in a metal mold maintained at 25°C to obtain a two-kind-three-layer bottle having a weight of 25 g, a ratio of the intermediate layer of 25% by weight and a volume of 530 ml.

The preform that was formed was measured for its DSC, and the bottle was measured for its DSC, compression strength, tensile strength and the amount of the aldehyde.

### [Comparative Example 1]

A preform and a bottle were formed in the same manner as in Example 1 but using an injector molding machine under such conditions that the temperature of the injection nozzle was 280°C, the resin pressure was 250 kgf/cm² and the inherent viscosity of the molten polyester at the time of melt injection, i.e., at the time of melt extrusion was 0.71 dL/g, and were evaluated in the same manner.

### [Comparative Example 2]

A preform and a bottle were formed in the same manner as in Example 2 but using an injector molding machine under such conditions that the temperature of the injection nozzle was 295°C, the resin pressure was 250 kgf/cm² and the inherent viscosity of the molten polyester at the time of melt injection, i.e., at the time of melt extrusion was 0.67 dL/g, and were evaluated in the same manner.

### [Comparative Example 3]

A preform and a bottle were formed in the same manner as in Example 3 but using a co-injector molding machine equipped with an injector for forming inner and outer layers and an injector for forming an intermediate layer under such conditions that the temperature of the injection nozzle was 280°C, the resin pressure was 250 kgf/cm² and the inherent viscosity of the molten polyester at the time of melt injection, i.e., at the time of melt extrusion was 0.68 dL/g, and were evaluated in the same manner.

### [Comparative Example 4]

A preform and a bottle were formed in the same manner as in Example 1 but using an extruder under such conditions that the temperature of the die head was 285°C and the inherent viscosity of the molten polyester resin at the time of melt extrusion was 0.71 dL/g, and were evaluated in the same manner.

### [Comparative Example 5]

A preform and a bottle were formed in the same manner as in Example 2 but using an extruder under such conditions that the temperature of the die head was 300°C and the inherent viscosity of the molten polyester resin at the time of melt extrusion was 0.67 dL/g, and were evaluated in the same manner.

### [Comparative Example 6]

A preform and a bottle were formed in the same manner as in Example 3 but using an extruder under such conditions that the temperature of the die portion was 285°C and the inherent viscosity of the molten polyester resin at the time of melt extrusion was 0.70 dL/g, and were evaluated in the same manner.

The results of evaluation of the above Examples and Comparative Examples were as shown in Table 1.

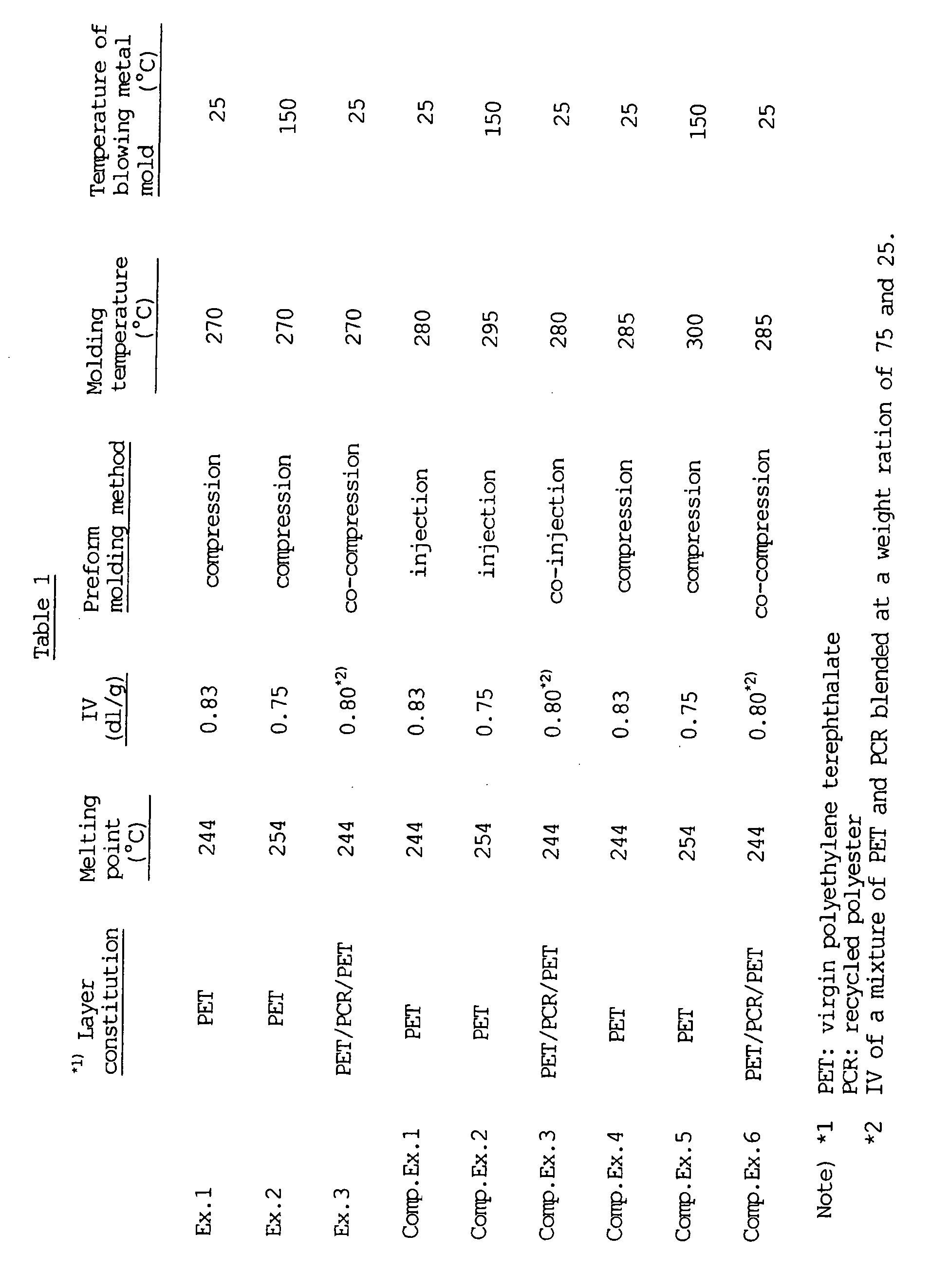

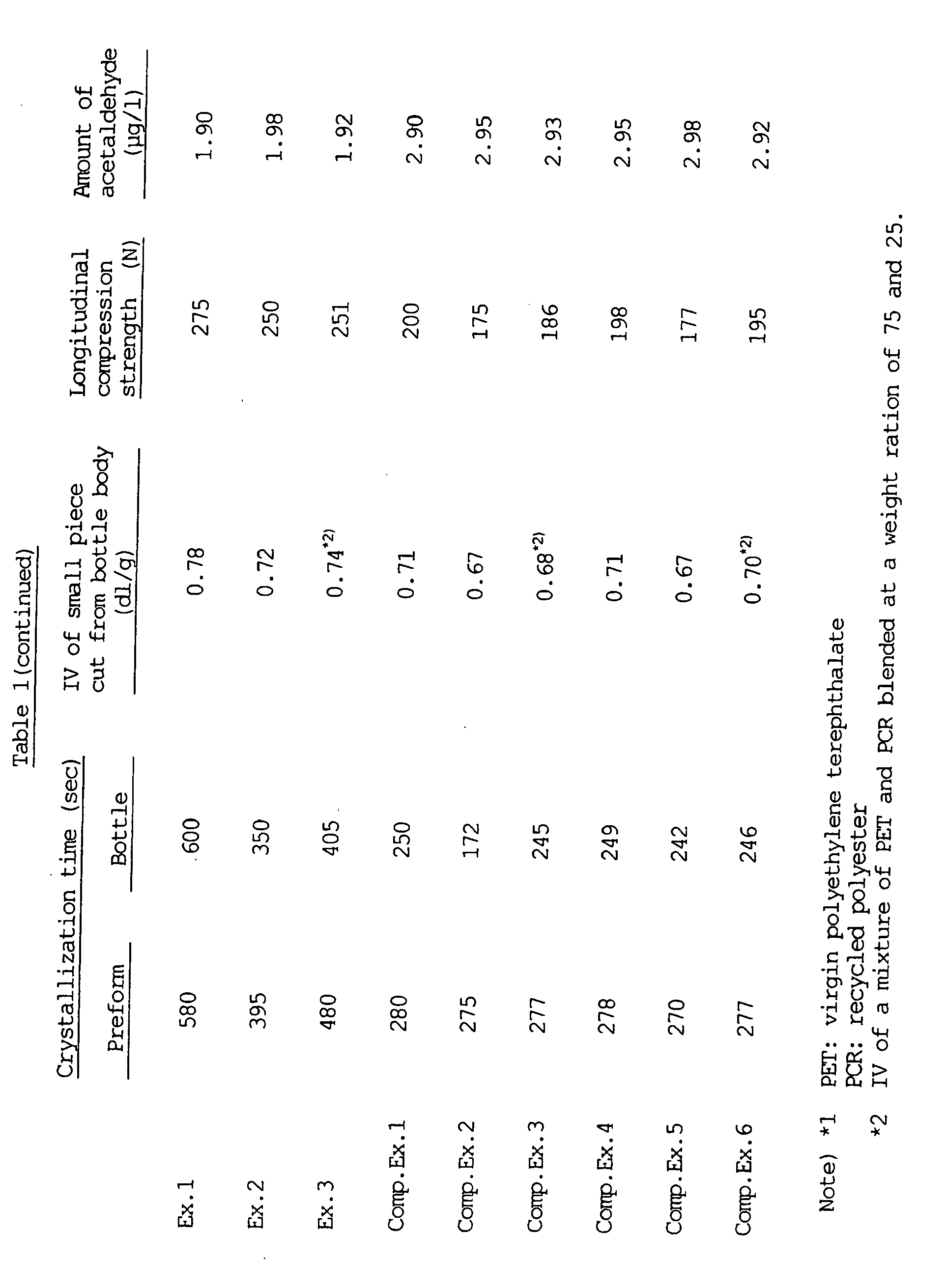

## Claims

1. A preform (20) formed by compression-forming and having a layer of a gas-barrier resin or a recycled polyester resin as an intermediate layer (25) and having inner (24) and outer (26) layers of a polyester resin, **characterized in that** the time is from 300 seconds to 700 seconds before a calorific value of isothermal crystallization of said polyester resin at 210°C reaches a maximum value.

2. A preform according to claim 1, wherein said polyester resin is the one that contains an ethylene terephthalate unit at a ratio of not smaller than 95 mol%.

3. A preform according to claim 1 or claim 2, wherein said polyester resin contains recycled polyester resins.

4. A biaxially drawn container (40) obtained by biaxially draw blow-forming the preform (20) of any of claims 1 to 3, **characterized in that** the time is from 300 seconds to 700 seconds before a calorific value of isothermal crystallization of the polyester layer at 210°C reaches a maximum value.

## Patentansprüche

1. Vorformling (20), der durch Druckumformen geformt wird und eine Schicht aus einem Gassperrenharz oder einem recycelten Polyesterharz als eine Zwischenschicht (25) hat und eine Innenschicht (24) und eine Außenschicht (26) aus einem Polyesterharz hat, **dadurch gekennzeichnet, dass** die Zeit von 300 Sekunden bis 700 Sekunden beträgt, bis ein Heizwert der isothermen Kristallisation des genannten Polyesterharzes bei 210 °C einen Höchstwert erreicht.

2. Vorformling nach Anspruch 1, wobei es sich bei dem genannten Polyesterharz um dasjenige handelt, das eine Ethylenterephthalat-Einheit in einem Verhältnis von nicht weniger als 95 mol% enthält.

3. Vorformling nach Anspruch 1 oder Anspruch 2, wobei das genannte Polyesterharz recycelte Polyesterharze enthält.

4. Biaxial gezogener Behälter (40), der durch biaxiales Blasziehformen des Vorformlings (20) nach einem der Ansprüche 1 bis 3 erhalten wird, **dadurch gekennzeichnet, dass** die Zeit von 300 Sekunden bis 700 Sekunden beträgt, bis ein Heizwert der isothermen Kristallisation der Polyesterschicht bei 210 °C einen Höchstwert erreicht.

## Revendications

1. Préforme (20) formée par étirage par enroulement-compression et comportant une couche de résine faisant barrière aux gaz ou une résine polyester recyclée comme couche intermédiaire (25) et comportant des couches interne (24) et externe (26) de résine polyester, **caractérisée en ce que** le temps pour qu'une valeur calorifique de cristallisation isotherme de ladite résine polyester à 210°C atteigne une valeur maximum s'étend de 300 à 700 secondes.

2. Préforme selon la revendication 1, dans laquelle ladite résine polyester est une résine qui contient une unité de téréphtalate d'éthylène à un rapport non inférieur à 95 % molaire.

3. Préforme selon la revendication 1 ou la revendication 2, dans laquelle ladite résine polyester contient des résines polyester recyclées.

4. Contenant étiré biaxialement (40) obtenu en formant par étirage-soufflage biaxial la préforme (20) selon l'une quelconque des revendications 1 à 3, **caractérisé en ce que** le temps pour qu'une valeur calorifique de cristallisation isotherme de la couche de polyester à 210°C atteigne une valeur maximum s'étend de 300 à 700 secondes.
